# EUROPÄISCHE PATENTSCHRIFT

(11) **EP 3 093 641 B1**
(45) Veröffentlichungstag und Bekanntmachung des Hinweises auf die Patenterteilung: **28.06.2017**
(21) Anmeldenummer: 15167181.5
(22) Anmeldetag: 11.05.2015
(51) Int. Cl.: G01L 5/12, F16B 31/02

(54) **VERFAHREN ZUR BESTIMMUNG EINER IN EIN BAUTEIL EINGEBRACHTEN AXIALEN ZUGKRAFT**
METHOD FOR DETERMINING THE AXIAL TENSILE FORCE INTRODUCED INTO A COMPONENT
PROCÉDÉ DE DÉTERMINATION D'UNE FORCE DE TRACTION AXIALE APPLIQUÉE À UN COMPOSANT

(43) Veröffentlichungstag der Anmeldung: 16.11.2016
(73) Patentinhaber: Siemens Aktiengesellschaft, 80333 München (DE)
(72) Erfinder: Kury, Peter, 45257 Essen (DE); Hänsel, Dirk, 14542 Werder (Havel) (DE)

(56) Entgegenhaltungen:
- EP-A2- 1 336 829
- WO-A1-99/64201
- JP-A- S57 161 526
- US-A- 4 246 780

## Beschreibung

Die Erfindung betrifft ein Verfahren zur Bestimmung einer in ein Bauteil eingebrachten axialen Zugkraft, bei dem
- das Bauteil ortsfest fixiert wird und von einem freien Ende des Bauteils her die axiale Zugkraft in das Bauteil mittels einer Spannvorrichtung eingebracht wird, die einen Spannkörper mit einer zentralen axialen Hauptgewindebohrung und mehreren gleichmäßig entlang des Umfangs der Hauptgewindebohrung verteilt angeordneten Nebengewindebohrungen sowie Spannschrauben, die in die Nebengewindebohrungen eingedreht sind, aufweist, indem der Spannkörper auf das freie Ende des Bauteils aufgeschraubt wird und die Spannschrauben in Richtung der ortsfesten Fixierung gegen ein ortsfestes Widerlager gespannt werden, und
- die in das Bauteil eingebrachte axiale Zugkraft bestimmt wird.

In diversen Anwendungsbereichen besteht Bedarf daran, Kräfte zu bestimmen, die in Bauteile eingebracht werden. Vor allem bei achsen-, wellen- oder bolzenförmigen Bauteilen sind die in axialer Richtung in die Bauteile eingebrachten Kräfte von besonderem Interesse.

Eine in ein Bauteil eingebrachte axiale Kraft kann zum Beispiel ermittelt werden, indem eine durch die Krafteinleitung hervorgerufene Verformung des Bauteils in axialer Richtung messtechnisch erfasst wird. Hierfür kommt in der Regel eine Mehrzahl von Messsensoren zum Einsatz, die in axialer Richtung entlang des Bauteils voneinander beabstandet angeordnet sind und mittels derer eine Axialstreckung und/oder Axialstauchung des Bauteils messtechnisch erfasst wird. Dabei besteht das Problem, dass nicht immer repräsentative Stellen der Bauteile zugänglich sind. Eine Positionierung einer Mehrzahl von Messsensoren an unterschiedlichen axialen Positionen stellt sich daher teilweise als schwierig dar.

Die Bestrebungen sind dahin gegangen, diese Nachteile auszuräumen. Aus der DE 10 206 679 beispielsweise ist ein Verfahren bekannt, bei dem die in eine Achse oder Welle eingebrachte axiale Kraft ermittelt wird, indem ein ringförmiger Messkörper, der sich an seinen beiden Stirnseiten an radial zueinander versetzten Anlageflächen abstützt, der axialen Kraft ausgesetzt wird. Der ringförmige Messkörper erfährt infolge dessen eine Biegeverformung, die mittels Dehnmessstreifen messtechnisch erfasst wird. Aus der erfassten Deformation des ringförmigen Messkörpers wird auf die axiale Kraft geschlossen.

Das bekannte Verfahren hat sich zur Messung besonders geringer axialer Kräfte bewährt. Es besteht jedoch auch Bedarf daran, größere axiale Kräfte z.B. im Bereich einiger Meganewton oder mehr zu messen.

Die Messung größerer Kräfte kann beispielsweise bei Gasturbinenanlagen von Interesse sein. Bei Zugankern, über welche die Rotorscheiben in axialer Richtung gegeneinander verspannt werden, sollte über die gesamte Betriebsdauer hinweg eine korrekte Zugankerspannung eingestellt sein, vor allem, um die Drehmomentübertragung und die mechanische Integrität des Rotors auch in Störfallsituationen zu gewährleisten.

Bei der ersten Inbetriebnahme einer neuen Anlage kann die Zugankerspannung durch definiertes hydraulisches Recken mit bekannter Kraft sowie über die elastische Längung des Zugankers erhalten werden. Im Laufe der Betriebsdauer der Gasturbine kann es wünschenswert sein, die Zugankerspannung zu kontrollieren.

Konkret ist der Zuganker, auf den die Rotorscheiben der Gasturbine aufgeschoben sind, an seinem einen Ende ortsfest fixiert und von seinem freien Ende her wird eine axiale Zugkraft in den Zuganker eingebracht, indem beispielsweise eine klassischen Mutter auf ein an dem freien Ende des Zugankers vorgesehenes Außengewinde aufgeschraubt und in Richtung der ortsfesten Fixierung des Zugankers gegen ein ortsfestes Widerlager verspannt wird. Der Aufbau einer Gasturbinenanlage mit Zuganker kann u.a. dem Fachbuch "Stationäre Gasturbinen" von Ch. Lechner und J. Seume, Springer-Verlag 2003, ISBN 3-540-42831-3 entnommen werden.

Da bei klassischen Muttern das Drehmoment, welches benötigt wird, um diese anzuziehen, mit zunehmender Größe der Muttern in erheblichem Maße ansteigt, kommen zur Verspannung von Bauteilen, für welche vergleichsweise große Muttern erforderlich sind, u.a. zur Verspannung von Zugankern in Gasturbinenanlagen, anstelle der klassischen Muttern teilweise weiterentwickelte Spannvorrichtungen zum Einsatz. Diese Spannvorrichtungen weisen einen in der Regel zylinderförmigen Spannkörper mit einer zentralen axialen Hauptgewindebohrung und mehrere gleichmäßig entlang des Umfangs der Hauptgewindebohrung verteilt angeordnete Nebengewindebohrungen sowie mehrere in die Nebengewindebohrungen eingedrehte Spannschrauben auf. Zum Verspannen eines Bauteils wird der Spannkörper auf das freie Ende des Bauteils aufgeschraubt. Zur Verspannung wird dann jedoch nicht der Spannkörper weiter gedreht, sondern es werden die Spannschrauben in Richtung der ortsfesten Fixierung des Bauteils gegen ein ortsfestes Widerlager verspannt.

Eine derartige Spannvorrichtung kann in Verschraubungen mit großen Durchmessern die hohen Vorspannkräfte aufnehmen und diese auf die einzelnen Spannschrauben verteilen. Eine Ausführungsform einer derartigen Spannvorrichtung ist beispielsweise aus der DE 699 37 246 T2 bekannt. Die Spannvorrichtungen mit mehreren Spannschrauben sind auch unter der Abkürzung MJT bekannt (englisch: Multi Jackbolt Tensioner).

Es ist bekannt, zur Bestimmung der Vorspannkraft, die mittels Spannvorrichtungen mit mehreren Spannschrauben in ein Bauteil eingeleitet werden, die an jeder einzelnen Spannschraube anliegende Vorspannkraft zu bestimmen und die einzelnen Werte aufzusummieren, um die resultierende Vorspannkraft zu erhalten. Die Vorspannkraft an jeder einzelnen Spannschraube kann über eine Differenzmessung der Schraubenlänge in einem verspannten und einem unverspannten Zustand ermittelt werden. Hierzu wird über einen an jedem Schraubenkopf vorgesehenen Sensor ein Ultraschallsignal in die jeweilige Schraube eingekoppelt, am unteren Ende der Schraube reflektiert und von dem Sensor wieder aufgenommen. Aus dem Laufzeitunterschied des Ultraschallsignales kann die Längenänderung und aus dieser wiederum die Vorspannkraft erhalten werden.

An dem bekannten Verfahren zur Bestimmung der Vorspannkraft wird teilweise als nachteilig erachtet, dass jede einzelne Spannschraube mit einem eigenen Sensor ausgerüstet sein muss und daher eine spezielle Ausrüstung zum Einsatz kommen muss. Hiermit ist neben dem größeren Aufwand auch ein nicht unerheblicher Kostenaufwand verbunden. Auch ist die Genauigkeit bei dieser Vorgehensweise, bei der eine Vielzahl von Einzelmessungen durchgeführt und anschließend die einzelnen Werte aufsummiert werden, nicht immer zufriedenstellend.

Aus der JP S57161526 A ist eine Messvorrichtung zur Bestimmung einer Spannung in einem Bolzen bekannt, bei der ein Magnetfeldsensor eingesetzt wird. Hierzu wird der Magnetfeldsensor seitlich an einem Schraubenkopf einer Schraube angebracht. In Abhängigkeit von der Spannung in der Schraube kann eine Änderung des Magnetfeldes ermittelt werden. Somit kann ausgehend von den ermittelten Messwerten die Spannung in der Schraube bestimmt werden.

Wenngleich die vorherige Methode ein einfaches Verfahren zur Bestimmung einer Spannung in einem Bolzen bereitstellt, so können jedoch viele Störgrößen, insbesondere bei komplexen Geometrieen - wie dies in aller Regel bei einem Rotor einer Gasturbine der Fall ist - einen unkalkulierbaren Einfluss auf das Messergebnis haben.

Aus der US 4,246,780 A ist ein weiteres Messverfahren zur Bestimmung der Spannung in einer Welle bekannt, wobei auf der Welle ein Ring mit Dehnungsmessstreifen angebracht wird. Bei einer Antriebswelle einer Schiffsschraube führt die Torsion zu einer Umfangsvergrößerung der Welle, welche über die Dehnungsmessstreifen ermittelt werden kann. Somit kann auf die Torsionsspannung in der Welle geschlossen werden.

Für den vorgesehenen Anwendungsfall ist die zuvor angegebene Messanordnung jedoch dahingehend problematisch, als dass die Messung unmittelbar innerhalb des unter Spannung stehenden Bereichs erfolgen muss. Dieser ist jedoch bei einem Zuganker eines Rotors einer Gasturbine nicht zugänglich. Weiterhin kann durch das zuvor angegebene Verfahren nur die Torsion zuverlässig bestimmt werden.

Ausgehend von dem vorgenannten Stand der Technik ist es eine Aufgabe der vorliegenden Erfindung, ein Verfahren der eingangs genannten Art derart weiterzuentwickeln, dass es eine besonders einfache, kostengünstige und robuste Bestimmung einer in ein Bauteil eingeleiteten axialen Kraft ermöglicht. Dabei soll das Verfahren insbesondere auch die Bestimmung vergleichsweise großer Kräfte ermöglichen, die beispielsweise in der Größenordnung mehrerer Meganewton liegen.

Zur Lösung dieser Aufgabe schafft die vorliegende Erfindung ein Verfahren der eingangs genannten Art, das dadurch gekennzeichnet ist, dass
- eine Verformung des Spannkörpers quer zu dessen axialer Richtung erfasst wird, und
- aus der Verformung des Spannkörpers die in das Bauteil eingebrachte axiale Zugkraft bestimmt wird.

Es hat sich gezeigt, dass bei Spannvorrichtungen mit einem Spannkörper, in den mehrere Spannschrauben eingedreht sind, infolge einer Krafteinwirkung in axialer Richtung eine Verformung des Spannkörpers quer zu der axialen Richtung auftritt. Der Spannkörper erfährt unter axialer Belastung u.a. eine nach außen gerichtete Stülpverformung, die repräsentativ für die Gesamtkraft auf den Spannkörper ist. Erfindungsgemäß wird diese Verformung des Spannkörpers in Querrichtung erfasst und aus der Verformung wird die in das Bauteil eingebrachte axiale Zugkraft ermittelt.

Die erfindungsgemäße Betrachtung der Verformung in Querrichtung bietet die Vorteile, dass sich die betrachtete Messgröße gegenüber den aus dem Stand der Technik bekannten Einzelmessungen an jeder Spannschraube vergleichsweise stark ändert und eine hohe relative Messgenauigkeit erzielt werden kann. Der Außendurchmesser des Spannkörpers kann sich beispielsweise um bis zu einigen 1/10% relativ dehnen und diese Änderung kann ohne Probleme messtechnisch erfasst werden.

Das elastische Verhalten des Spannkörpers und dessen geometrische Abmessungen unterliegen keiner nennenswerten Alterung, so dass das erfindungsgemäße Verfahren auch ideal geeignet ist, um über längere Zeiträume, insbesondere über mehrere Jahre hinweg zuverlässige Werte für eine in ein Bauteil eingebrachte axiale Zugkraft zu liefern.

Unter Anwendung des erfindungsgemäßen Verfahrens kann eine mittlere Verformung des Spannkörpers erfasst werden, die repräsentativ für die axiale Gesamtkraft ist und zwar auch dann, wenn die Deformation des Spannkörpers entlang seines Umfanges aufgrund einer unterschiedlichen Belastung der Spannschrauben nicht gleichmäßig ist.

Für die Durchführung des erfindungsgemäßen Verfahrens ist es ferner nicht erforderlich, dass das Bauteil über seine axiale Erstreckung frei zugänglich ist, da allein der Spannkörper der Spannvorrichtung zur Bestimmung der Zugkraft zugänglich sein muss. Kommt das erfindungsgemäße Verfahren zur Zugkraftbestimmung des Zugankers einer Gasturbinenanlage zum Einsatz, so ist insbesondere ein Ausbau des Rotors nicht erforderlich.

Gleichzeitig ist das erfindungsgemäße Verfahren mit vergleichsweise geringem Aufwand durchführbar und verursacht keine erheblichen Kosten. Es ist nicht, wie im Stand der Technik erforderlich, dass jede Spannschraube der Spannvorrichtung eine spezielle Ausstattung aufweist.

Die Verformung des Spannkörpers der Spannvorrichtung in Querrichtung kann zum Beispiel unter Verwendung eines Dehnungssensors, wie einem Dehnmessstreifen messtechnisch erfasst werden. Andere Vorgehensweisen, z.B. eine einfache Längenmessung des Außenumfangs des Spannkörpers an einer vorgegebenen axialen Position sind ebenfalls möglich.

Um aus der erfindungsgemäß erfassten Verformung des Spannkörpers quer zur axialen Richtung die in das Bauteil eingeleitete axiale Kraft zu bestimmen kann eine unter bekannten Kraftbedingungen aufgenommene Kalibrierkurve herangezogen werden, welche Werten einer Verformung, beispielsweise Werten einer Längenänderung des Außendurchmessers des Spannkörpers oder Werten eines Widerstandes eines Dehnmessstreifens eine entsprechende axiale Zugkraft zuordnet. Auch ist es prinzipiell möglich, den Zusammenhang zwischen der Verformung des Spannkörpers und der eingebrachten Zugkraft über mathematische Modelle zu berechnen bzw. zu simulieren.

Gemäß einer Ausführungsform des erfindungsgemäßen Verfahrens ist vorgesehen, dass die Verformung des Spannkörpers an wenigstens einer vorgegebenen axialen Position an dem Spannkörper erfasst wird.

Insbesondere wird die Verformung an einer axialen Position in demjenigen axialen Endbereich des Spannkörpers erfasst, welcher in Richtung der ortsfesten Fixierung des Bauteils weist.

In demjenigen axialen Endbereich des Spannkörpers, welcher der ortsfesten Fixierung des Bauteils zugewandt ist kann die Verformung quer zur axialen Richtung besonders geeignet erfasst werden. In diesem axialen Endbereich des Spannkörpers ist die Verformung quer zur axialen Richtung am ausgeprägtesten.

In zweckmäßiger Ausgestaltung des erfindungsgemäßen Verfahrens wird eine Verformung des Außenumfangs des Spannkörpers erfasst. Da im Bereich des Außenumfangs des Spannkörpers eine nahezu ideal einachsige radiale Dehnung auftritt, ist dieser Bereich besonders geeignet, um für das erfindungsgemäße Verfahren betrachtet zu werden. Kommt ein Dehnmessstreifen zur Erfassung der Verformung zum Einsatz, so treten keine Querempfindlichkeiten auf, also keine Empfindlichkeiten quer zu der Messrichtung in Umfangsrichtung des Außendurchmessers des Spannkörpers auf und die Messwerte sind besonders zuverlässig. Auch eine Verformung des Innenumfangs des Spannkörpers kann prinzipiell erfasst werden, hier treten jedoch mehrachsige Spannungszustände auf.

Die Verformung des Spannkörpers kann beispielsweise mittels eines Dehnungssensors, insbesondere eines Dehnmessstreifens erfasst werden, der an dem Spannkörper vorgesehen ist oder an dem Spannkörper angeordnet wird.

Dabei kann insbesondere vorgesehen sein, dass die Verformung des Spannkörpers mittels eines Dehnmessstreifens erfasst wird, der sich entlang des Außenumfangs des Spannkörpers, insbesondere entlang des gesamten Außenumfangs des Spannkörpers erstreckt. Der Dehnungssensor kann sich beispielsweise über eine ringförmige Fläche entlang des Außenumfangs des Spannkörpers erstrecken. Besonders vorteilhaft ist es, wenn sich der Dehnmesssensor entlang des gesamten Außenumfangs des Spannkörpers erstreckt.

Der Dehnmessstreifen kann an dem Spannkörper angeordnet werden oder aber dieser ist unmittelbar an dem Spannkörper vorgesehen. In vorteilhafter Ausgestaltung ist ein Dehnmessstreifen an dem Spannkörper vorgesehen, indem dieser unmittelbar auf dieses aufgesputtert ist. Das Aufsputtern bietet den Vorteil, dass kein Klebstoff zur Fixierung des Dehnmessstreifens an dem Spannkörper zum Einsatz kommen muss, der über längere Zeiträume in seiner Haftkraft nachlassen kann.

Ein im Rahmen des erfindungsgemäßen Verfahrens zum Einsatz kommender Dehnmessstreifen kann beispielsweise durch eine Schicht aus NiCr oder Ni-DLC auf SiO2 oder DLC (diamantähnlicher Kohlenstoff) gebildet sein.

Eine weitere Ausführungsform des erfindungsgemäßen Verfahrens zeichnet sich dadurch aus, dass die Verformung des Außenumfangs des Spannkörpers erfasst wird, indem ein Messring, dessen Durchmesser einstellbar ist und entlang dessen Außenumfang ein Dehnmessstreifen vorgesehen ist, an einer vorgegebenen axialen Position auf den Spannkörper aufgespannt wird, und ein Wert für die Deformation des Dehnmessstreifens aufgezeichnet und insbesondere mit einem Referenzwert verglichen wird.

Der Dehnmessstreifen erstreckt sich in vorteilhafter Ausgestaltung um den gesamten Umfang des Messrings. Auch bei dem Messring kann ferner vorgesehen sein, dass der Dehnmessstreifen auf diesen aufgesputtert ist, um die mit der Verwendung eines Klebstoffes verbundenen Nachteile zu vermeiden.

Alternativ zu der Verwendung eines Messrings mit Dehnmessstreifen kann die Verformung des Außenumfangs des Spannkörpers auch erfasst werden, indem ein Messring, dessen Durchmesser mittels einer Mikrometerschraube einstellbar ist und der eine Längenskala aufweist, an einer vorgegebenen axialen Position auf den Spannkörper aufgespannt wird, und ein Längenwert abgelesen und insbesondere mit einem Referenzwert verglichen wird.

Die Verwendung eines Messrings, also eines von dem Spannkörper unabhängigen weiteren Bauteils zur messtechnischen Erfassung der Verformung des Spannkörpers bietet den Vorteil, dass der Spannkörper keinerlei Ausstattung aufweisen muss. Das erfindungsgemäße Verfahren kann mittels eines Messrings an jeder bestehenden Spannvorrichtung auf besonders einfache Weise durchgeführt werden.

Der Messring wird insbesondere auf eine vorgegebene Tangentialspannung auf den Spannkörper aufgespannt, um besonders zuverlässige Messwerte zu erhalten.

Um auf den Spannkörper aufgespannt zu werden, weist der Messring zweckmäßiger Weise ein Spannelement, beispielsweise eine Spannfeder oder eine Schraube auf. Der Messring ist in zweckmäßiger Weise als offener Ring ausgebildet, dessen Enden mittels des Spannelementes aufeinander zu und voneinander weg bewegt werden können, um den Durchmesser des Messrings verändern und diesen auf den Spannkörper der Spannvorrichtung aufspannen zu können.

Der Messring kann beispielsweise aus Teflon, Kaptonfolie oder Nomexfolie gefertigt sein.

In Weiterbildung des erfindungsgemäßen Verfahrens ist vorgesehen, dass die Verformung des Außenumfangs des Spannkörpers erfasst wird, indem
- der Messring an einer axialen Referenzposition in dem axialen Endbereich des Spannkörpers, welcher in Richtung des freien Endes des Bauteils weist, auf den Spannkörper aufgespannt wird,
- an der axialen Referenzposition auf der Skala des Messrings ein Längenwert abgelesen wird oder an der axialen Referenzposition ein Wert für die Deformation des Dehnmessstreifens erfasst wird,
- der an der axialen Referenzposition abgelesene Längenwert als Längen-Referenzwert abgespeichert wird oder der an der axialen Referenzposition erfasste Wert für die Deformation als Deformations-Referenzwert abgespeichert wird,

- der Messring gelöst und in Richtung der ortsfesten Fixierung des Bauteils verschoben und an wenigstens einer axialen Messposition auf den Spannkörper aufgespannt wird,
- an der wenigstens einen axialen Messposition auf der Skala des Messrings ein Längenwert abgelesen wird oder an der wenigstens einen axialen Messposition ein Wert für die Deformation des Dehnmessstreifens erfasst wird, und
- die Differenz zwischen dem Längenwert an der axialen Referenzposition und dem Längenwert an der wenigstens einen axialen Messposition ermittelt wird oder die Differenz zwischen dem Wert für die Deformation des Dehnmessstreifens an der axialen Referenzposition und dem Wert für die Deformation des Dehnmessstreifens an der wenigstens einen axialen Messposition ermittelt wird.

Die Verformung des Spannkörpers kann gemäß dieser Ausführungsform beispielsweise erfasst werden, indem der Messring einmal in dem von der ortsfesten Fixierung des Bauteils angewandten Endbereich des Spannkörpers auf diesen aufgespannt und diese axiale Position als Referenzposition betrachtet wird. Die Deformation des Dehnmessstreifens an dieser Stelle oder der an dem Messring abgelesene Längenwert an dieser axialen Position wird dann als Referenzwert, insbesondere als Nullwert gewählt, da die Deformation des Spannkörpers hier am geringsten bzw. null ist. Dabei wird zweckmäßiger Weise eine axiale Position gewählt, die so nah wie möglich an der dem freien Ende des Bauteils zugewandten Stirnseite des Spannkörpers liegt, um die Position mit der geringsten Verformung als Referenz zu nutzen.

Anschließend wird der Messring gelöst, axial in Richtung der ortsfesten Fixierung des Bauteils verschoben und an einer anderen axialen Position, die der ortsfesten Fixierung des Bauteils näher liegt, erneut auf den Spannkörper aufgespannt und es wird die Deformation des Dehnmessstreifens bzw. ein Längenwert an dieser axialen Messposition erfasst. Dabei kann nur an einer axialen Messposition die Deformation bzw. ein Längenwert erfasst werden oder dies geschieht an mehreren axialen Messpositionen, wobei dann ein Vergleich der an dem Messpositionen erfassten Werte beispielsweise jeweils mit dem Referenzwert erfolgt oder die an jeweils benachbarten Messstellen erfassten Werte miteinander verglichen werden.

Als Wert für die Deformation des Dehnmessstreifens wird insbesondere in an sich bekannter Weise ein Widerstandswert des Dehnmessstreifens erfasst.

In Weiterbildung des erfindungsgemäßen Verfahrens ist vorgesehen, dass der Messring an wenigstens einer axialen Messposition auf den Spannkörper aufgeschraubt wird, die in demjenigen axialen Endbereich des Spannkörpers liegt, welcher in Richtung der ortsfesten Fixierung des Bauteils weist.

Insbesondere für den Fall, dass nur ein Referenzwert an der axialen Referenzposition und ein Messwert an einer axialen Messposition erfasst wird, liegt die eine axiale Messposition zweckmäßiger Weise so nah wie möglich an dem der ortsfesten Fixierung des Bauteil zugewandten Ende des Spannkörpers, wo die Verformung quer zur axialen Richtung den größten Ausschlag aufweist. Werden an mehreren axialen Messpositionen Werte erfasst, liegt in vorteilhafter Ausgestaltung wenigstens eine axiale Messposition möglichst nahe an diesem Ende.

Eine geeignete axiale Position nahe dem der ortsfesten Fixierung zugewandten Ende des Spannkörpers ist beispielsweise in axialer Richtung einen Millimeter oder wenige Millimeter von diesem Ende des Spannkörpers entfernt.

Die Erfindung sieht weiterhin vor, dass eine Spannvorrichtung verwendet wird, welche einen Spannkörper mit einer zylindrischen Grundform aufweist, entlang dessen Zylinderachse sich die Hauptgewindebohrung erstreckt. Diese Form hat sich für den Spannkörper bewährt.

Eine weitere Ausführungsform zeichnet sich dadurch aus, dass eine Spannvorrichtung verwendet wird, welche einen Spannkörper aufweist, durch welchen sich die Nebengewindebohrungen axial oder im Wesentlichen axial erstrecken.

Schließlich kann vorgesehen sein, dass die in einen Zuganker einer Gasturbine eingeleitete axiale Kraft bestimmt wird und insbesondere aus der in den Zuganker eingeleiteten axialen Kraft die mechanische Spannung des Zugankers in axialer Richtung berechnet wird. Das erfindungsgemäße Verfahren kann beispielsweise durchgeführt werden, um die axiale Zugkraft in dem Zuganker einer Gasturbine zu ermitteln. Dabei kann es sich insbesondere um einen zentralen Zuganker in einer Gasturbinenanlage handeln.

Prinzipiell kann das erfindungsgemäße Verfahren bei beliebigen Bauteilen zum Einsatz kommen, in die mittels einer Spannvorrichtung mit einem Spannkörper und mehreren Spannschrauben eine axiale Zugkraft eingebracht wird. Da die Spannvorrichtungen mit Spannkörper und mehreren Spannschrauben herkömmliche Muttern ersetzen können, ist die Anwendung für alle Bereich denkbar, in denen auch mit herkömmlichen Muttern eine axiale Zugkraft in ein Bauteil eingebracht wird. Beispielsweise kann die in einen Bolzen eingebrachte axiale Kraft erfindungsgemäß bestimmt werden, der zusammen mit einer Spannvorrichtung mit Spannkörper und mehreren Spannschrauben einen Flansch zusammendrückt.

Weitere Merkmale und Vorteile der vorliegenden Erfindung werden anhand der nachfolgenden Beschreibung einer Ausführungsform des erfindungsgemäßen Verfahrens unter Bezugnahme auf die beiliegende Zeichnung deutlich. Darin ist
- Figur 1: eine schematische Schnittdarstellung einer Spannvorrichtung mit einem Spannkörper und einer Mehrzahl von Spannschrauben im unverspannten Zustand;
- Figur 2: eine Außenansicht des Spannkörpers der in Figur 1 dargestellten Spannvorrichtung in schematischer Darstellung;
- Figur 3: eine Aufsicht auf den Spannkörper aus Figur 2;
- Figur 4: eine schematische Schnittdarstellung des zentralen Zugankers einer Gasturbinenanlage, welcher mit der in Figur 1 dargestellten Spannvorrichtung in axialer Richtung verspannt ist,
- Figur 5: eine Schnittdarstellung des in Figur 4 dargestellten verspannten Spannkörpers;
- Figur 6: eine Aufsicht auf den in Figur 4 dargestellten Spannkörper im verspannten Zustand für einen Fall stark ungleichmäßiger Krafteinleitung durch die Spannschrauben in schematischer Darstellung;
- Figur 7: eine schematische Darstellung einer Ausführungsform eines Messrings mit einer Schraube, entlang dessen Außenumfang ein Dehnmessstreifen vorgesehen ist;
- Figur 8: eine schematische Darstellung einer weiteren Ausführungsform eines Messrings mit einer Spannfeder, entlang dessen Außenumfang ein Dehnmessstreifen vorgesehen ist;
- Figuren 9 - 12: die Verfahrensschritte einer Ausführungsform des erfindungsgemäßen Verfahrens zur Bestimmung einer in ein Bauteil eingebrachten axialen Zugkraft.

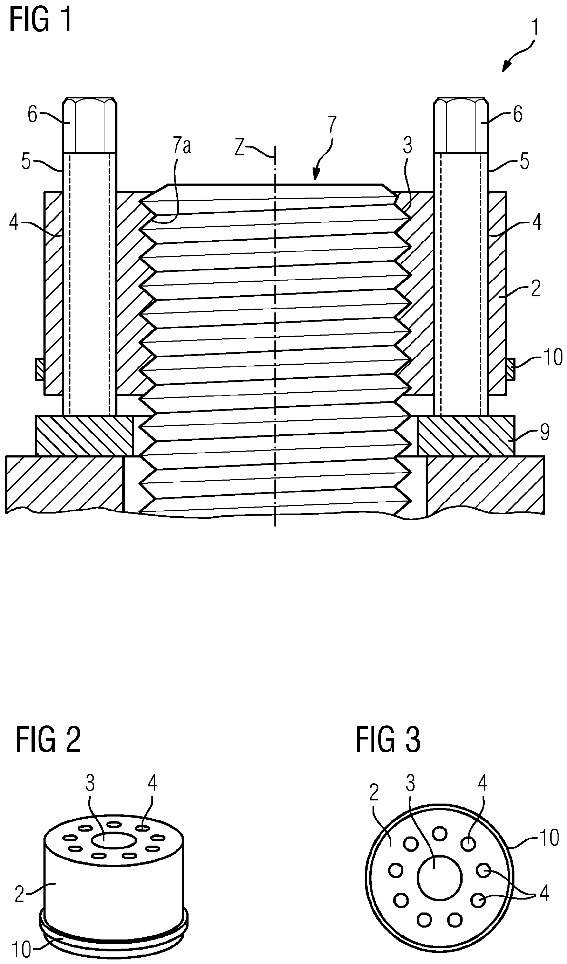

Die Figur 1 zeigt eine Spannvorrichtung 1 mit einem zylinderförmigen Spannkörper 2, in dem eine zentrale axiale Hauptgewindebohrung 3 und mehrere gleichmäßig entlang des Umfangs der Hauptgewindebohrung 3 verteilt angeordnete axiale Nebengewindebohrungen 4 vorgesehen sind. Die Hauptgewindebohrung 3 erstreckt sich entlang der Zylinderachse Z des zylinderförmigen Spannkörpers 2 durch diesen. Der Durchmesser der Hauptgewindebohrung 3 ist deutlich größer als der der Nebengewindebohrung 4. Konkret ist er mehr als viermal so groß wie der Durchmesser der Nebengewindebohrungen 4.

Bei dem dargestellten Ausführungsbeispiel sind, wie den Darstellungen in der Figuren 2 und 3 entnommen werden können, die den Spannkörper 2 der in Figur 1 dargestellten Spannvorrichtung 1 in der Außenansicht zeigen, insgesamt neun axiale Nebengewindebohrungen 4 in dem Spannkörper 2 vorgesehen, die gleichmäßig um die zentrale Hauptgewindebohrung 3 angeordnet sind.

In jede Nebengewindebohrung 4 ist eine Spannschraube 5 eingedreht, die jeweils in axialer Richtung zu beiden Seiten aus dem Spannkörper 2 herausragt. An dem in Figur 1 nach oben weisenden Enden der Spannschrauben 5 ist jeweils ein Schraubenkopf 6 vorgesehen, von dem in an sich bekannter Weise ein in den Figuren nicht dargestelltes geeignetes Werkzeug zum Herein- und Herausdrehen der Spannschrauben 5 aufgenommen werden kann.

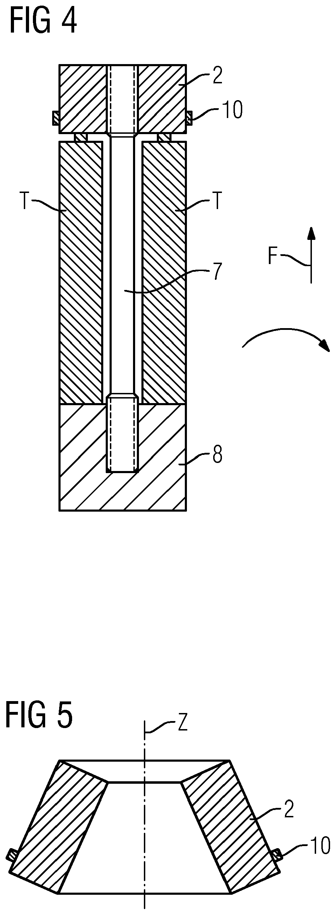

Der Spannkörper 2 der Spannvorrichtung 1 ist auf das an dem freien Ende eines in der Figur 1 nur partiell dargestellten zentralen Zugankers 7 einer in den Figuren nicht erkennbaren Gasturbinenanlage vorgesehenes Außengewinde 7a aufgeschraubt. Der zentrale Zuganker 7 und der auf diesen aufgeschraubte Spannkörper 2 sind in der schematisch Darstellung in Figur 4 zu erkennen.

Der zentrale Zuganker 7 ist an seinem in der Figur 4 nach unten weisenden Ende ortsfest fixiert, indem er in die vordere Hohlwelle 8 der Gasturbinenanlage eigeschraubt ist. Auf den Zuganker 7 ist in an sich bekannter Weise eine Mehrzahl von Rotorscheiben aufgeschoben, die in der Figur 4 nicht dargestellt sind. Die Figur 4 zeigt lediglich in schematischer Darstellung die Rotortrommel T, welche alle Rotorscheiben und die hintere Hohlwelle umfasst. Die Rotorscheiben werden mittels des Zugankers 7 parallel zueinander gehalten und mittels der Spannvorrichtung 1 gegeneinander gepresst. Hierzu sind die Spannschrauben 5 der Spannvorrichtung 1 in Richtung der ortsfesten Fixierung des Zugankers 7 in der Hohlwelle 8 gegen eine zwischen dem Spannkörper 2 und den Rotorscheiben liegende, nur in der Figur 1 erkennbaren Druckscheibe 9 aus besonders harten Material verspannt, die als ortfestes Widerlager dient. Infolge eines Hereindrehens der Spannschrauben 5 in die Nebengewindebohrungen 4 in dem Spannkörper 2 wird der Abstand zwischen der als ortsfestes Widerlager dienenden Druckscheibe 9 und dem auf den Zuganker 7 aufgeschraubten Spannkörper 2 erhöht und infolge dessen eine axiale Zugkraft in den Zuganker 7 eingebracht.

Diese in den zentralen Zuganker 7 eingebrachte axiale Zugkraft sollte einem definierten Wert entsprechen, um einen sicheren Betrieb der Gasturbinenanlage zu gewährleisten. Vor der erstmaligen Inbetriebnahme der Anlage kann die in den Zuganker 7 eingebrachte axiale Kraft auf einen vorbestimmten Wert eingestellt werden. Im Laufe der Betriebsdauer der Gasturbinenanlage kann es wünschenswert sein, die Zugankerspannung zu kontrollieren. Zur Bestimmung der in den Zuganker 7 eingebrachten axialen Kraft wird eine Ausführungsform des erfindungsgemäßen Verfahrens durchgeführt.

Erfindungsgemäß wird eine Verformung des Spannkörpers 2 der Spannvorrichtung 1 quer zur axialen Richtung erfasst und aus der Verformung des Spannkörpers 2 in Querrichtung wird die in den Zuganker 7 eingebrachte axiale Zugkraft bestimmt.

Im verspannten Zustand unterliegt der Spannkörper 2 infolge der einwirkenden axialen Kraft einer Verformung quer zur axialen Richtung, konkret einer Stülpverformung. Der Figur 5, welche eine Schnittdarstellung des Spannkörpers 2 aus Figur 4 in vereinfachter Darstellung ohne Nebengewindebohrungen 4 und ohne Spannschrauben 5 zeigt, kann diese Verformung quer zur axialen Richtung, also quer zur Zylinderachse Z entnommen werden. In der Figur 5 ist die Querverformung zur Verdeutlichung besonders ausgeprägt dargestellt. Dass die Kraft in axialer Richtung eine Verformung des Spannkörpers 2 quer dazu verursacht ist in der Figur 4 durch entsprechende Pfeile rein schematisch angedeutet.

Zur messtechnischen Erfassung der Verformung des Spannkörpers 2 quer zur Zylinderachse Z ist bei der dargestellten Ausführungsform ein Dehnmessstreifen 10 an dem Spannkörper 2 vorgesehen. Konkret erstreckt sich der Dehnmessstreifen 10, wie in den Figuren 2 und 3 erkennbar, über eine ringförmige Fläche entlang des gesamten Außenumfanges des Spannkörpers 2 und zwar in demjenigen axialen Endbereich des Spannkörpers, welcher der ortsfesten Fixierung des Zugankers 7 in der Hohlwelle 8 zugewandt ist. Der Dehnmessstreifen 10 ist auf den Spannkörper 2 aufgesputtert.

Infolge der Deformation des Spannkörpers 2 in dem in Figur 5 dargestellten Zustand hat der Dehnmessstreifen 10 in an sich bekannter Weise einen anderen Widerstand als in einem unverspannten Zustand, in welchem der Spannkörper 2 nicht aufgestülpt ist. Diese Widerstandsänderung ist ein Maß für die Deformation des Spannkörpers 2. Unter Verwendung einer Kalibrierkurve, die zuvor für bekannte axiale Kraftwerte aufgenommen wurde, kann der messtechnisch registrierten Verformung, also bei dem dargestellten Ausführungsbeispiel dem erfassten Widerstandswert des Dehnmessstreifens 10, ein Wert für die axiale Kraft zugeordnet werden. Die Erfassung des Widerstandswertes und die Bestimmung der axialen Kraft erfolgen in an sich bekannter Weise in einer in den Figuren nicht dargestellten Mess- und Auswerteeinrichtung, die mit dem Dehnmessstreifen verbunden ist.

Die erfindungsgemäße Bestimmung der axialen Kraft über die Messung der Verformung des Spannkörpers 2 mittels Dehnmessstreifen 10 kann zu beliebigen Zeitpunkten durchgeführt werden. Der Spannkörper 2 ist problemlos zugänglich. Eine Entfernung des Rotors der Gasturbine ist für die Durchführung des erfindungsgemäßen Verfahrens nicht erforderlich.

Das elastische Verhalten und die geometrischen Abmessungen des Spannkörpers 2 unterliegen praktisch keiner nennenswerten Alterung, so dass auch über mehrere Jahre hinweg, insbesondere über die gesamte Betriebsdauer der Gasturbinenanlage hinweg zuverlässige Messwerte mittels des Dehnmessstreifens 10 erhalten werden könne. Da der Dehnmessstreifen 10 auf den Spannkörper 2 aufgesputtert ist, hält dieser besonders zuverlässig auch über einen längeren Zeitraum und die mit Klebstoffen verbundene Nachteile, insbesondere eine unerwünschte Ablösung des Dehnmessstreifens 10 von dem Spannkörper 2, werden vermieden.

Insbesondere entlang des Außenumfangs des Spannkörpers 2 ist die Verformung des Spannkörpers 2 nahezu ideal radial. Es treten kaum Einflüsse durch eine Querempfindlichkeit des Dehnmessstreifens 10, also einer Empfindlichkeit quer zu der vorgesehenen Messrichtung in Umfangsrichtung des Außenumfangs des Spannkörpers 2 auf, so dass besonders zuverlässige Messwerte erhalten werden.

Die Durchführung des erfindungsgemäßen Verfahrens ist dabei mit gegenüber den bekannten Verfahren geringerem Aufwand und somit geringeren Kosten verbunden.

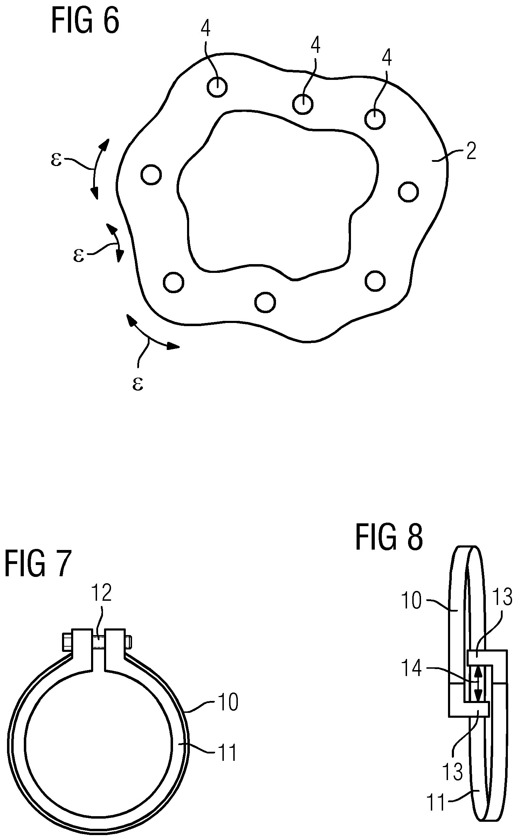

Ein weiterer Vorteil des erfindungsgemäßen Verfahrens besteht darin, dass mittels nur einen Dehnmessstreifens 10 eine mittlere Verformung des Spannkörpers 2 erfasst werden kann, die repräsentativ für die Gesamtkraft ist und zwar auch dann, wenn wie in Figur 6 dargestellt, die Deformation des Spannkörpers 2 entlang seines Außenumfanges aufgrund einer unterschiedlichen Belastung der Spannschrauben 5 nicht gleichmäßig ist. In der Figur 6 ist die ungleichmäßige Verformung des Spannkörpers zur Veranschaulichung überzeichnet dargestellt.

Alternativ zu dem zuvor beschriebenen Ausführungsbeispiel, bei dem eine Spannvorrichtung 1 mit einem Spannkörper 2 verwendet wird, auf den ein Dehnmessstreifen 10 unmittelbar aufgesputtert ist, kann das erfindungsgemäße Verfahren auch unter Verwendung einer von dem Spannkörper 2 separaten Messvorrichtung, konkret eines Messrings 11 durchgeführt werden.

In den Figuren 7 und 8 ist jeweils eine schematische Darstellung einer Ausführungsform eines Messrings 11 dargestellt, der für das erfindungsgemäße Verfahren zum Einsatz kommen kann. Der Messring 11 ist als offener Ring ausgestaltet, dessen Enden jeweils mittels eines Spannelementes aufeinander zu und voneinander weg bewegt werden können, um den Durchmesser des Messrings 11 einzustellen. An dem Außenumfang beider Messringe 11 ist ferner ein Dehnmessstreifen 10 vorgesehen, der sich über den gesamten Außenumfang des jeweiligen Messrings 11 erstreckt. Jeder der beiden dargestellten Messringe 11 ist aus Teflon gefertigt.

Die beiden in den Figuren 7 und 8 dargestellten Messringe 11 unterscheiden sich nur hinsichtlich des Spannelementes, das vorgesehen ist, um den Messring 11 auf den Außenumfang des Spannkörpers 2 der Spannvorrichtung 1 mit mehreren Spannschrauben 5 aufzuspannen.

Während der in Figur 7 dargestellte Messring 11 eine Schraube 12 zum Spannen auf den Spannkörper 2 aufweist, die sich durch zwei Öffnungen in den Endbereichen des offenen Messrings 11 erstreckt, ist bei dem in Figur 8 dargestellten Messring 11 zwischen zwei von den beiden Endbereichen des offenen Ringes abragenden Vorsprüngen 13 eine Spannfeder 14 vorgesehen, die in der Figur 8 nur durch einen Doppelpfeil schematisch angedeutet ist.

Der Messring 11 kommt zum Einsatz, um erfindungsgemäß die Verformung des Spannkörpers 2 einer Spanneinrichtung 1 mit mehreren Spannschrauben 5 zu erfassen. Der Messring 11 ermöglicht die Erfassung der Verformung in Querrichtung auch bei Spannkörpern 2, die nicht mit einem Dehnmessstreifen versehen sind.

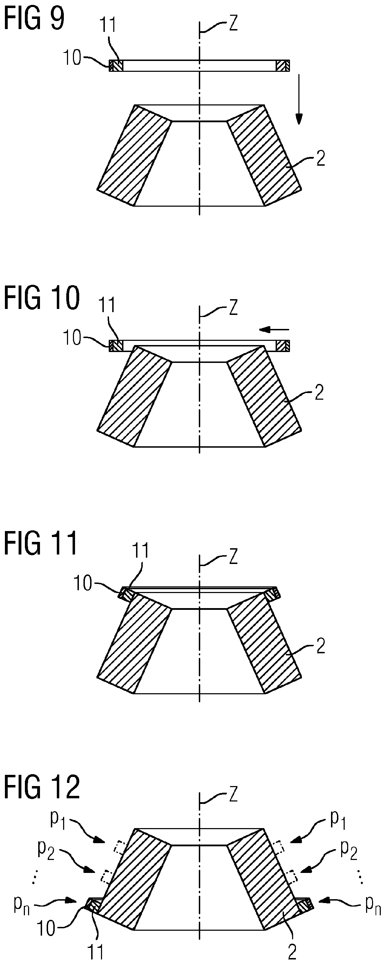

Die Durchführung einer Ausführungsform des erfindungsgemäßen Verfahrens unter Verwendung eines Messrings wird im Folgenden anhand der Figuren 9 bis 12 erläutert.

In einem ersten Schritt wird der Messring 11, welcher wahlweise gemäß Figur 7 mit einer Schraube 12 oder gemäß Figur 8 mit einer Spannfeder 14 versehen sein kann, auf den Spannkörper 2 von außen aufgeschoben (vgl. Figur 9) und an einer axialen Referenzposition in demjenigen axialen Endbereich des Spannkörpers 2 auf diesen aufgespannt, der in Richtung des freien Endes des Zugankers 7 weist (vgl. Figur 10 und 11). Der Zuganker 7 ist in den Figuren 9 bis 12 nicht dargestellt. Wie in den Figuren 4 und 5 weist das freie Ende des in den Figuren 9 bis 12 nicht dargestellten Zugankers 7 nach oben. Bei dem dargestellten Ausführungsbeispiel liegt die axiale Referenzposition, wie in Figur 1 erkennbar, unmittelbar an dem nach oben weisenden Ende des Spannkörpers 2.

Der Spannvorgang des Messrings 11 auf den Spannkörper 2 ist in Figur 10 schematisch mit einem Pfeil angedeutet.

Kommt ein Messring 11 gemäß Figur 7 zum Einsatz, so wird dieser auf den Spannkörper 2 von außen aufgespannt, indem die Schraube 12 weiter rein gedreht wird, so dass die beiden Endbereiche des offenen Messrings 11 weiter aufeinander zubewegt werden, wodurch der Durchmesser des Messrings 11 verkleinert wird.

Unter Verwendung des Messrings gemäß Figur 8 muss die Spannfeder 14 zusammengedrückt werden, um den Durchmesser des Messrings 11 zu vergrößern und den Messring 11 in dieser Stellung axial an dem Spannkörper 2 positionieren zu können. Ist der Messring 11 an der axialen Referenzposition angeordnet, kann die Spannfeder 14 freigegeben werden, wodurch die beiden Vorsprünge 13 auseinandergedrückt und infolge dessen der Durchmesser des Messrings 11 verkleinert und auf den Spannkörper aufgespannt wird.

Der Messring 11 wird vorzugsweise auf eine vorgegebene Tangentialspannung auf den Spannkörper aufgespannt, um besonders zuverlässige Messwerte zu erhalten.

An der axialen Referenzposition wird im aufgespannten Zustand des Messrings 11 die Deformation des an dem Messring 11 vorgesehenen Dehnmessstreifen 10, insbesondere ein entsprechender Widerstandswert des Dehnmessstreifens 10 erfasst. Dieser Wert wird als Widerstands-Referenzwert, insbesondere als Nullwert abgespeichert, da die Deformation an der axialen Referenzposition am geringsten bzw. null ist.

Der Messring 11 wird anschließend gelöst und in Richtung der ortsfesten Fixierung des Zugankers 7, also in den Figuren 9 bis 12 nach unten verschoben und an einer ersten axialen Messposition auf den Spannkörper 2 aufgespannt. Die erste axiale Messposition p₁ ist in der Figur 12 an der obersten gestrichelt dargestellten Kontur des Messrings 11 zu erkennen.

An der ersten axialen Messposition p₁ wird erneut ein Wert für die Deformation des Dehnmessstreifens 10, konkret ein Widerstandswert erfasst und abgespeichert.

Im Anschluss daran wird an zwei oder mehr weiteren axialen Messpositionen, die in der Figur 12 mit p₂ bis pₙ bezeichnet sind, jeweils ein Widerstandswert aufgenommen und abgespeichert.

Aus dem (axialen) Verlauf der Widerstandswerte kann die Deformation des Spannkörpers 2 und aus dieser wiederum die in den Zuganker 7 eingebrachte axiale Zugkraft ermittelt werden, was beispielsweise unter Verwendung von zuvor erstellten Kalibrierkurven möglich ist.

Alternativ dazu, dass an mehreren axialen Positionen an dem Spannkörper 2 Widerstandswerte erfasst werden kann auch nur eine einzelne Messung in dem in den Figuren 9 bis 12 nach unten weisende Endbereich des Spannkörpers 2 durchgeführt werden, beispielsweise an der in der Figur 12 dargestellten Position des Messrings 11. Liegt bereits ein Referenzwert, insbesondere ein Nullwert vor, so kann auch aus dem Vergleich des einzelnen Messwertes mit dem Referenzwert die Deformation des Spannkörpers 2 und aus dieser die axiale Kraft ermittelt werden.

Auch ist es möglich, genau zwei Messungen, eine Referenzmessung an dem in den Figuren 9 bis 12 oberen Ende des Spannkörpers 2 und eine Messung an dem in den Figuren 9 bis 12 unteren Ende des Spannköpers 2, durchzuführen.

Die Erfassung der Widerstandswerte des an dem Messring 11 vorgesehenen Dehnmessstreifens 10 und die Bestimmung der axialen Kraft erfolgen wiederum in an sich bekannter Weise in einer in den Figuren nicht dargestellten Mess- und Auswerteeinrichtung, die mit dem Dehnmessstreifen 10 an dem Messring 11 verbunden ist.

Unter Verwendung eines Messrings 11 kann das erfindungsgemäße Verfahren an den Spannkörpern 2 sämtlicher bereits im Betrieb befindlicher Spannvorrichtungen 1 durchgeführt werden, ohne dass eine Nachrüstung der Spannvorrichtungen 1 nötig wäre.

Ein weiterer Vorteil eines Messrings 11 besteht darin, dass die axiale Richtung spannungsfrei ist, wodurch ausgeschlossen wird, dass der Dehnmessstreifen 10 infolge von Querempfindlichkeiten verfälschte Signale liefert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bestimmung einer in ein Bauteil (7) eingebrachten axialen Zugkraft, bei dem
- das Bauteil (7) ortsfest fixiert wird und von einem freien Ende des Bauteils (7) her die axiale Zugkraft in das Bauteil (7) mittels einer Spannvorrichtung (1) eingebracht wird, die einen Spannkörper (2) mit einer zentralen axialen Hauptgewindebohrung (3) und mehreren gleichmäßig entlang des Umfangs der Hauptgewindebohrung (3) verteilt angeordneten Nebengewindebohrungen (4) sowie Spannschrauben (5), die in die Nebengewindebohrungen (4) eingedreht sind, aufweist, indem der Spannkörper (2) auf das freie Ende des Bauteils (7) aufgeschraubt wird und die Spannschrauben (5) in Richtung der ortsfesten Fixierung gegen ein ortsfestes Widerlager gespannt werden, und
- die in das Bauteil (7) eingebrachte axiale Zugkraft bestimmt wird,
**dadurch gekennzeichnet, dass**
- eine Verformung des Spannkörpers (2) quer zu dessen axialer Richtung (Z) erfasst wird, und
- aus der Verformung des Spannkörpers (2) die in das Bauteil (7) eingebrachte axiale Zugkraft bestimmt wird.

2. Verfahren nach Anspruch 1,
**dadurch gekennzeichnet, dass**
die Verformung des Spannkörpers (2) an wenigstens einer vorgegebenen axialen Position an dem Spannkörper (2) erfasst wird.

3. Verfahren nach Anspruch 2,
**dadurch gekennzeichnet, dass**
die Verformung an einer axialen Position in demjenigen axialen Endbereich des Spannkörpers (2) erfasst wird, welcher in Richtung der ortsfesten Fixierung des Bauteils (7) weist.

4. Verfahren nach einem der vorhergehenden Ansprüche,
**dadurch gekennzeichnet, dass**
eine Verformung des Außenumfangs des Spannkörpers (2) erfasst wird.

5. Verfahren nach einem der vorhergehenden Ansprüche,
**dadurch gekennzeichnet, dass**
die Verformung des Spannkörpers (2) mittels eines Dehnungssensors, insbesondere eines Dehnmessstreifens (10) erfasst wird, der an dem Spannkörper (2) vorgesehen ist oder an dem Spannkörper (2) angeordnet wird.

6. Verfahren nach Anspruch 4 und 5,
**dadurch gekennzeichnet, dass**
die Verformung des Spannkörpers (2) mittels eines Dehnmessstreifens (10) erfasst wird, der sich entlang des Außenumfangs des Spannkörpers (2), insbesondere entlang des gesamten Außenumfangs des Spannkörpers (2) erstreckt.

7. Verfahren nach Anspruch 4 und 5,
**dadurch gekennzeichnet, dass**
die Verformung des Außenumfangs des Spannkörpers (2) erfasst wird, indem ein Messring (11), dessen Durchmesser einstellbar ist und entlang dessen Außenumfang ein Dehnmessstreifen (10) vorgesehen ist, an einer vorgegebenen axialen Position auf den Spannkörper (2) aufgespannt wird, und ein Wert für die Deformation des Dehnmessstreifens (10) aufgezeichnet und insbesondere mit einem Referenzwert verglichen wird.

8. Verfahren nach Anspruch 7,
**dadurch gekennzeichnet, dass**
ein Messring (11) verwendet wird, auf den der Dehnmessstreifen (10) aufgesputtert ist.

9. Verfahren nach Anspruch 4,
**dadurch gekennzeichnet, dass**
die Verformung des Außenumfangs des Spannkörpers (2) erfasst wird, indem ein Messring, dessen Durchmesser mittels einer Mikrometerschraube einstellbar ist und der eine Längenskala aufweist, an einer vorgegebenen axialen Position auf den Spannkörper (2) aufgespannt wird, und ein Längenwert abgelesen und insbesondere mit einem Referenzwert verglichen wird.

10. Verfahren nach einem der Ansprüche 7 bis 9,
**dadurch gekennzeichnet, dass**
die Verformung des Außenumfangs des Spannkörpers (2) erfasst wird, indem
- der Messring (11) an einer axialen Referenzposition in dem axialen Endbereich des Spannkörpers (2), welcher in Richtung des freien Endes des Bauteils (7) weist, auf den Spannkörper (2) aufgespannt wird,
- an der axialen Referenzposition auf der Skala des Messrings ein Längenwert abgelesen wird oder an der axialen Referenzposition ein Wert für die Deformation des Dehnmessstreifens (10) erfasst wird,
- der an der axialen Referenzposition abgelesene Längenwert als Längen-Referenzwert abgespeichert wird oder der an der axialen Referenzposition erfasste Wert für die Deformation als Deformations-Referenzwert abgespeichert wird,
- der Messring (11) gelöst und in Richtung der ortsfesten Fixierung des Bauteils (7) verschoben und an wenigstens einer axialen Messposition auf den Spannkörper (2) aufgespannt wird,
- an der wenigstens einen axialen Messposition auf der Skala des Messrings ein Längenwert abgelesen wird oder an der wenigstens einen axialen Messposition ein Wert für die Deformation des Dehnmessstreifens (10) erfasst wird, und
- die Differenz zwischen dem Längenwert an der axialen Referenzposition und dem Längenwert an der wenigstens einen axialen Messposition ermittelt wird oder die Differenz zwischen dem Wert für die Deformation des Dehnmessstreifens (10) an der axialen Referenzposition und dem Wert für die Deformation des Dehnmessstreifens (10) an der wenigstens einen axialen Messposition ermittelt wird.

11. Verfahren nach Anspruch 10,
**dadurch gekennzeichnet, dass**
der Messring (11) an wenigstens einer axialen Messposition auf den Spannkörper (2) aufgeschraubt wird, die in demjenigen axialen Endbereich des Spannkörpers (2) liegt, welcher in Richtung der ortsfesten Fixierung des Bauteils (7) weist.

12. Verfahren nach einem der vorhergehenden Ansprüche,
**dadurch gekennzeichnet, dass**
eine Spannvorrichtung (1) verwendet wird, welche einen Spannkörper (2) mit einer zylindrischen Grundform aufweist, entlang dessen Zylinderachse sich die Hauptgewindebohrung (3) erstreckt.

13. Verfahren nach einem der vorhergehenden Ansprüche,
**dadurch gekennzeichnet, dass**
eine Spannvorrichtung (1) verwendet wird, welche einen Spannkörper (2) aufweist, durch welchen sich die Nebengewindebohrungen axial oder im Wesentlichen axial erstrecken.

## Claims

1. Method for determining an axial tensile force introduced into a component (7), in which
- the component (7) is fixed in place and the axial tensile force is introduced into the component (7) from a free end of the component (7) by means of a loading device (1) which has a loading body (2) with a central axial main threaded bore (3) and a plurality of secondary threaded bores (4) distributed uniformly along the circumference of the main threaded bore (3), and loading screws (5) which are screwed into the secondary threaded bores (4), in that the loading body (2) is screwed onto the free end of the component (7) and the loading screws (5) are loaded against a stationary abutment in the direction of the fixing in place, and
- the axial tensile force introduced into the component (7) is determined,
**characterized in that**
- deformation of the loading body (2) transversely with respect to its axial direction (Z) is measured, and
- the axial tensile force introduced into the component (7) is determined from the deformation of the loading body (2).

2. Method according to Claim 1,
**characterized in that**
the deformation of the loading body (2) is measured at at least one predefined axial position on the loading body (2).

3. Method according to Claim 2,
**characterized in that**
the deformation is measured at an axial position **in that** axial end region of the loading body (2) which points in the direction of the fixing of the component (7) in place.

4. Method according to one of the preceding claims,
**characterized in that**
a deformation of the outer circumference of the loading body (2) is measured.

5. Method according to one of the preceding claims,
**characterized in that**
the deformation of the loading body (2) is measured by means of a strain sensor, in particular a strain gauge (10), which is provided on the loading body (2) or is arranged on the loading body (2).

6. Method according to Claims 4 and 5,
**characterized in that**
the deformation of the loading body (2) is measured by means of a strain gauge (10) which extends along the outer circumference of the loading body (2), in particular along the entire outer circumference of the loading body (2).

7. Method according to Claims 4 and 5,
**characterized in that**
the deformation of the outer circumference of the loading body (2) is measured **in that** a measuring ring (11), the diameter of which is adjustable and along the outer circumference of which a strain gauge (10) is provided, is clamped onto the loading body (2) at a predefined axial position, and a value for the deformation of the strain gauge (10) is recorded and in particular compared with a reference value.

8. Method according to Claim 7,
**characterized in that**
use is made of a measuring ring (11) onto which the strain gauge (10) is sputtered.

9. Method according to Claim 4,
**characterized in that**
the deformation of the outer circumference of the loading body (2) is measured **in that** a measuring ring, the diameter of which is adjustable by means of a micrometer screw and which has a longitudinal scale, is clamped onto the loading body (2) at predefined axial position, and a length value is read and in particular compared with a reference value.

10. Method according to one of Claims 7 to 9,
**characterized in that**
the deformation of the outer circumference of the loading body (2) is measured **in that**
- the measuring ring (11) is clamped onto the loading body (2) at an axial reference position in the axial end region of the loading body (2) which points in the direction of the free end of the component (7),
- a length value is read on the scale of the measuring ring at the axial reference position, or a value for the deformation of the strain gauge (10) is measured at the axial reference position,
- the length value read at the axial reference position is stored as a length reference value, or the value for the deformation measured at the axial reference position is stored as a deformation reference value,
- the measuring ring (11) is detached and shifted in the direction of the fixing of the component (7) in place and is clamped onto the loading body (2) at at least one axial measuring position,
- a length value is read on the scale of the measuring ring at the at least one axial measuring position, or a value for the deformation of the strain gauge (10) is measured at the at least one axial measuring position, and
- the difference between the length value at the axial reference position and the length value at the at least one axial measuring position is determined, or the difference between the value for the deformation of the strain gauge (10) at the axial reference position and the value for the deformation of the strain gauge (10) at the at least one axial measuring position is determined.

11. Method according to Claim 10,
**characterized in that**
the measuring ring (11) is screwed onto the loading body (2) at at least one axial measuring position which is located **in that** axial end region of the loading body (2) which points in the direction of the fixing of the component (7) in place.

12. Method according to one of the preceding claims,
**characterized in that**
use is made of a loading device (1) which has a loading body (2) with a cylindrical base shape, along the cylindrical axis of which the main threaded bore (3) extends.

13. Method according to one of the preceding claims,
**characterized in that**
use is made of a loading device (1) which has a loading body (2) through which the secondary threaded bores extend axially or substantially axially.

## Revendications

1. Procédé de détermination d'une force de traction axiale appliquée à une pièce (7), dans lequel
- on immobilise la pièce (7) à poste fixe et on applique à la pièce la force de traction axiale à partir d'une extrémité libre de la pièce ( 7), au moyen d'un dispositif (1) de serrage, qui a un corps (2) de serrage ayant un taraudage (3) principal axial central et plusieurs taraudages (4) secondaires répartis uniformément sur le pourtour du taraudage (3) principal, en vissant le corps (2) de serrage sur l'extrémité libre de la pièce (7) et en serrant les vis (5) de serrage, dans la direction de la l'immobilisation à poste fixe, sur une butée à poste fixe et
- on détermine la force de traction axiale appliquée à la pièce (7),
**caractérisé en ce que**
- on détecte une déformation du corps (2) de serrage transversalement à sa direction (Z) axiale et
- à partir de la déformation du corps (2) de serrage, on détermine la force de traction axiale appliquée à la pièce (7).

2. Procédé suivant la revendication 1,
**caractérisé en ce que**
on détecte la déformation du corps (2) de serrage en au moins une position axiale donnée à l'avance sur le corps (2) de serrage.

3. Procédé suivant la revendication 2,
**caractérisé en ce que** l'on détecte la déformation d'une position axiale dans la partie d'extrémité axiale du corps ( 2) de serrage, qui est tournée dans la direction de l'immobilisation à poste fixe de la pièce (7).

4. Procédé suivant l'une des revendications précédentes,
**caractérisé en ce que**
l'on détecte une déformation du pourtour extérieur du corps (2) de serrage.

5. Procédé suivant l'une des revendications précédentes,
**caractérisé en ce que**
l'on détecte la déformation du corps (2) de serrage au moyen d'un capteur de dilatation, notamment d'une jauge (10) de contrainte, qui est prévue sur le corps (2) de serrage, ou qui est montée sur le corps (2) de serrage.

6. Procédé suivant les revendications 4 et 5,
**caractérisé en ce que**
l'on détecte la déformation du corps (2) de serrage au moyen d'une jauge (10) de contrainte, qui s'étend sur le pourtour extérieur du corps (2) de serrage, notamment sur tout le pourtour extérieur du corps (2) de serrage.

7. Procédé suivant les revendications 4 et 5,
**caractérisé en ce que** l'on détecte la déformation du pourtour extérieur du corps (2) de serrage, en serrant une bague (11) de mesure de diamètre réglable et pourvue d'une jauge (10) de contrainte sur son pourtour extérieur, en une position axiale donnée à l'avance sur le corps (2) de serrage et en enregistrant une valeur de la déformation de la jauge (10) de contrainte, notamment en la comparant à une valeur de référence.

8. Procédé suivant la revendication 7,
**caractérisé en ce qu'**
on utilise une bague (11) de mesure sur laquelle la jauge (10) de contrainte est déposée par pulvérisation cathodique.

9. Procédé suivant la revendication 4,
**caractérisé en ce que**
l'on détecte la déformation du pourtour extérieur du corps (2) de serrage, en serrant une bague de mesure de diamètre réglable au moyen d'une vis micrométrique et ayant une échelle de longueur, en une position axiale donnée à l'avance sur le corps (2) de serrage et en lisant une valeur de longueur, en la comparant notamment à une valeur de référence.

10. Procédé suivant l'une des revendications 7 à 9,
**caractérisé en ce que**
on détecte la déformation du pourtour extérieur du corps (2) de serrage en
- serrant, sur le corps (2) de serrage, la bague (11) de mesure, en une position de référence axiale, dans la partie d'extrémité axiale du corps (2) de serrage, qui est tournée dans la direction de l'extrémité libre de la pièce (7),
- en lisant, sur la position de référence axiale sur l'échelle de la bague de mesure, une valeur de longueur ou en détectant sur la position de référence axiale, une valeur de la déformation de la jauge (10) de contrainte,
- en mémorisant, comme valeur de référence de longueur, la valeur de longueur lue à la position de référence axiale ou en mémorisant, comme valeur de référence de déformation, la valeur, détectée à la position de référence axiale, de la déformation,
- en séparant la bague (11) de mesure et en la déplaçant dans la direction de l'immobilisation à poste fixe de la pièce (7) et en la serrant, en au moins une position de mesure axiale, sur le corps (2) de serrage,
- en lisant, à la au moins une position de mesure axiale, une valeur de longueur sur l'échelle de la bague de mesure ou en détectant, en la au moins une position de mesure axiale, une valeur de la déformation de la jauge (10) de contrainte et
- en déterminant la différence entre la valeur de la longueur, en la position de référence axiale, et la valeur de la longueur, en la au moins une position de mesure axiale, ou la différence entre la valeur de la déformation de la jauge (10) de contrainte, en la position de référence axiale, et la valeur de la déformation de la jauge (10) de contrainte, en la au moins une position de mesure axiale.

11. Procédé suivant la revendication 10,
**caractérisé en ce que**
l'on visse la bague (11) de mesure sur le corps (2) de serrage, en au moins une position de mesure axiale, qui se trouve dans la partie d'extrémité axiale du corps (2) de serrage, qui est tournée dans la direction de l'immobilisation à poste fixe de la pièce (7).

12. Procédé suivant l'une des revendications précédentes,
**caractérisé en ce que**
l'on utilise un dispositif (1) de serrage, qui a un corps (2) de serrage ayant une forme de base cylindrique, le long de l'axe cylindrique duquel s'étend le taraudage (3) principal.

13. Procédé suivant l'une des revendications précédentes,
**caractérisé en ce que**
l'on utilise un dispositif (1) de serrage, qui a un corps (2) de serrage, dans lequel les taraudages secondaires s'étendent axialement ou sensiblement axialement.
